# EUROPÄISCHE PATENTSCHRIFT

(11) **EP 2 019 451 B1**
(45) Veröffentlichungstag und Bekanntmachung des Hinweises auf die Patenterteilung: **06.11.2013**
(21) Anmeldenummer: 08010768.3
(22) Anmeldetag: 13.06.2008
(51) Int. Cl.: H01R 9/24, H04Q 1/14

(54) **Funktionselement einer Telekommunikationsanlage**
Function element of a telecommunication device
Elément de fonction d'une installation de télécommunication

(30) Priorität: 27.07.2007 DE 202007010607 U
(43) Veröffentlichungstag der Anmeldung: 28.01.2009
(73) Patentinhaber: CCS Technology, Inc., Wilmington, DE 19803 (US)
(72) Erfinder: Matthies, Jürgen, Dipl.-Ing., 58300 Wetter (Ruhr) (DE); Breuer-Heckel, Mike, Dipl.-Ing., 44143 Dortmund (DE); Badura, Stefan, Dipl.-Ing., 58708 Menden (DE); Kittler, Lars, Dipl.-Ing., 58239 Schwerte (DE); Lapp, Oliver, Dipl.-Ing., 42399 Wuppertal (DE)
(74) Vertreter: Sturm, Christoph

(56) Entgegenhaltungen:
- DE-A1- 2 643 150
- US-A- 5 575 689
- US-A1- 2007 082 524

## Beschreibung

Die Erfindung betrifft ein Funktionselement einer Telekommunikationsanlage nach dem Oberbegriff des Anspruchs 1.

In der Telekommunikationstechnik kommen Verteilerleisten zum Einsatz, um Kabeladern sogenannter Teilnehmerkabel und/oder System kabel und/oder Rangierkabel anzuschließen. Aus dem Produktkatalog "Anschluss- und Verteilersysteme, Ausgabe 1, Corning Cable Systems GmbH & Co. KG, Jahr 2000" sind unterschiedliche Verteilerleisten von Telekommunikationsanlagen bekannt, wobei sämtliche Verteilerleisten mehrere Funktionselemente umfassen. Jedes Funktionselement weist in einem Gehäuse aufgenommene Kontaktfedern auf. Die Kontaktfedern bilden an einer Vorderseite des Gehäuses als IDC-Kontakte ausgebildete Anschlusselemente für den Anschluss von Kabeladern eines Teilnehmerkabels und/oder System kabels und/oder Rangierkabels aus. In einem von den als IDC-Kontakte ausgebildeten Anschlusselementen beabstandeten Abschnitt verfügen die Kontaktfedern über Kontaktpunkte, wobei sich die Kontaktpunkte dann, wenn das Funktionselement als Trennelement ausgebildet ist, einander berühren, und wobei dann, wenn das Funktionselement als Schaltelement ausgebildet ist, sich die Kontaktpunkte nicht berühren sondern vielmehr unter Zwischenanordnung eines Stegs voneinander getrennt sind.

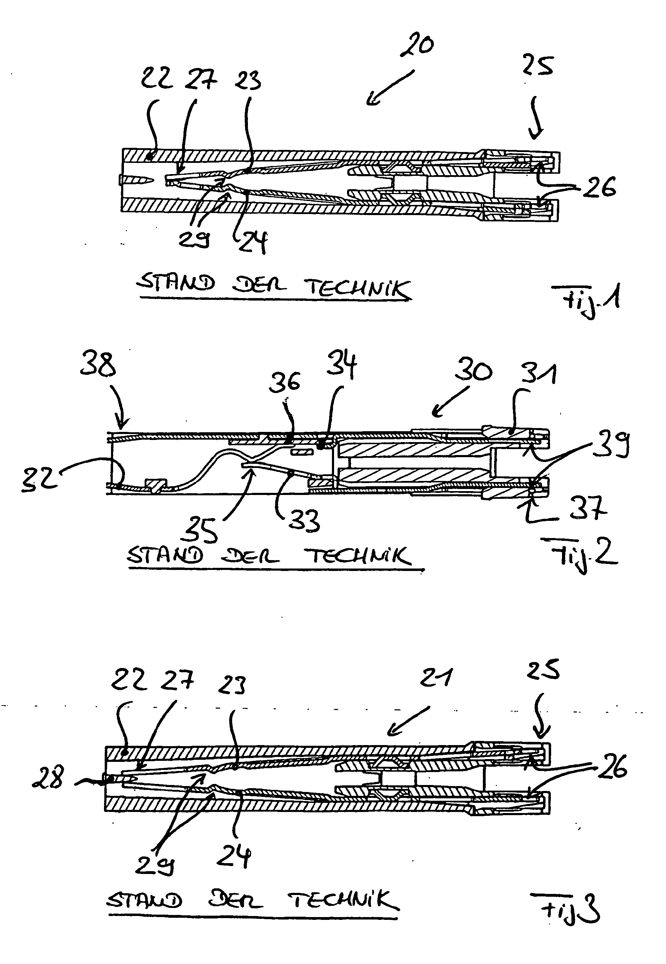

Fig. 1 und 3 zeigen Querschnitte durch Funktionselemente einer Verteilerleiste der Serie 1000 RT, wobei Details der Verteilerleiste der Serie 1000 RT aus dem Produktkatalog "Anschluss- und Verteilersysteme, Ausgabe 1, Seiten 39 bis 49, Corning Cable Systems GmbH & Co. KG, Jahr 2000" bekannt sind.

So ist das Funktionselement 20 gemäß Fig. 1 als Trennelement ausgebildet, das Funktionselement 21 der Fig. 3 hingegen ist als Schaltelement ausgeführt. Beiden Funktionselementen 20, 21 der Serie 1000 RT ist gemeinsam, dass dieselben zwei in einem Gehäuse 22 aufgenommene Kontaktfedern 23, 24 aufweisen, wobei jede der Kontaktfedern 23, 24 im Bereich einer Vorderseite 25 des Gehäuses 22 als IDC-Kontakte ausgebildete Anschlusselemente 26 ausbildet. Beabstandet von den Anschlusselementen 26 bilden die Kontaktfedern 23, 24 der Funktionselemente 20, 21 Kontaktpunkte 27 aus, die sich bei dem als Trennelement ausgebildeten Funktionselemente 20 der Fig. 1 berühren und die bei dem als Schaltelement ausgebildeten Funktionselement 21 der Fig. 3 unter Zwischenanordnung eines Stegs 28 voneinander getrennt sind und sich demnach nicht berühren.

Einem Vergleich der Fig. 1 und 3 kann unmittelbar entnommen werden, dass zur Bereitstellung unterschiedlicher Funktionselemente, nämlich des gemäß Fig. 1 als Trennelement ausgebildeten Funktionselements 20 und des gemäß Fig. 3 als Schaltelement ausgebildeten Funktionselements 21, unterschiedlich gestaltete, nämlich unterschiedlich lange, Kontaktfedern 23, 24 bereitgehalten werden müssen.

Soll mit den Kontaktfedern 23, 24 der Funktionselemente 20, 21 gemäß Fig. 1 und 3 z. B. eine Schutzeinrichtung kontaktiert werden, so ist dies nur dadurch möglich, dass dieselbe ausgehend von der Vorderseite 25 zwischen die beiden Kontaktfedern 23, 24 eingeschoben wird und dabei mit Ausstellungen 29 der Kontaktfedern 23, 24 kontaktiert wird, wobei die Ausstellungen 29 in etwa in der Mitte der Breitenerstreckung der Kontaktfedern 23, 24 positioniert sind.

Fig. 2 zeigt ein Funktionselement 30 einer Verteilerleiste der Serie 5000, wobei hinsichtlich technischer Details der Serie 5000 auf den Produktkatalog "Anschluss- und Verteilersysteme, Aufgabe 1, Seiten 17 bis 38, Corning Cable Systems GmbH & Co. KG, Jahr 2000" verwiesen wird.

Dieses aus dem Stand der Technik bekannte, als Trennelement ausgebildete Funktionselement 30 verfügt über mindestens drei in einem Gehäuse 31 aufgenommene Kontaktfedern 32, 33 und 34, wobei sowohl zwischen den Kontaktfedern 32 und 33 als auch zwischen den Kontaktfedern 32 und 34 Kontaktpunkte 35 ausgebildet sind, im Bereich derer sich die jeweiligen Kontaktfedern 32, 33 bzw. 32, 34 berühren. Dabei ist der Kontaktpunkt zwischen den Kontaktfedern 32, 34 in Fig. 2 nicht sichtbar, vielmehr ein isolierendes Element 36. Hierdurch ist es möglich, sowohl ausgehend von einer Vorderseite 37 als auch ausgehend von einer Rückseite 38 des Gehäuses 31 ein z. B. als Schutzeinrichtung ausgebildetes Element zwischen die Kontaktfedern des Funktionselements 30 einzuführen, wobei sich für das Kontaktelement 30 der Fig. 2 gegenüber den Kontaktelementen 20, 21 der Fig. 1, 2 einerseits die Anzahl und andererseits die Unterschiedlichkeit der Kontaktfedern erhöht. Im Bereich der Vorderseite 37 bilden die Kontaktfedern 33, 34 wiederum als IDC-Kontakte ausgebildete Anschlusselemente 39 aus.

Ein Funktionselement einer Telekommunikationsanlage mit den Merkmalen des Oberbegriffs des Anspruchs 1 ist aus US 2007/082524 A1 bekannt. Weiter Stand der Technik ist aus US 5 575 689 A und DE 26 43 150 A1 bekannt.

Hiervon ausgehend liegt der vorliegenden Erfindung das Problem zu Grunde, ein neuartiges Funktionselement einer Telekommunikationsanlage zu schaffen.

Dieses Problem wird durch ein Funktionselement gemäß Anspruch 1 gelöst.

Das erfindungsgemäße Funktionselement verfügt über eine Vielzahl von Vorteilen. So kann mit zwei identischen Kontaktfedern, die lediglich um 180° gedreht im Gehäuse aufgenommen sind, sowohl ein als Trennelement ausgebildetes Funktionselement als auch ein als Schaltelement ausgebildetes Funktionselement bereitgestellt werden. Weiterhin ist es möglich, sowohl ausgehend von der Vorderseite des Gehäuses als auch ausgehend von der Rückseite des Gehäuses ein z. B. als Schutzeinrichtung ausgebildetes Element zwischen die Kontaktfedern des Funktionselements einzuführen. Unter Gewährleistung eines einfachen konstruktiven Aufbaus sowie unter Verwendung von lediglich zwei hinsichtlich ihres Aufbaus identischen Kontaktfedern kann demnach sowohl ein Trennelement als auch ein Schaltelement realisiert werden, bei welchem sowohl ausgehend von der Vorderseite als auch ausgehend von der Rückseite - und zwar gemeinsam oder getrennt - ein z. B. als Schutzeinrichtung ausgebildetes Element zwischen die Kontaktfedern eingeführt werden kann.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: einen Querschnitt durch ein erstes aus dem Stand der Technik bekanntes, als Trennelement ausgebildetes Funktionselement;
- Fig. 2: einen Querschnitt durch ein erstes aus dem Stand der Technik bekanntes, als Trennelement ausgebildetes Funktionselement;
- Fig. 3: einen Querschnitt durch ein erstes aus dem Stand-der-Technik bekanntes, als Schaltelement ausgebildetes Funktionselement;
- Fig. 4:: einen Querschnitt durch ein erfindungsgemäßes als Trennelement ausgebildetes Funktionselement;
- Fig. 5a, 5b:: unterschiedliche Ansichten von Kontaktfedern des erfindungsge- mäßen Funktionselements der Fig. 4;
- Fig. 6a, 6b:: unterschiedliche Ansichten von alternativen Kontaktfedern des erfindungsgemäßen Funktionselements;
- Fig. 7:: eine perspektivische Ansicht eines ersten, in das erfindungsge- mäße Funktionselement der Fig. 4 einführbaren Elements;
- Fig. 8:: eine perspektivische Ansicht eines zweiten, in das erfindungsge- mäße Funktionselement der Fig. 4 einführbaren Elements;
- Fig. 9:: eine perspektivische Ansicht eines dritten, in das erfindungsge- mäße Funktionselement der Fig. 4 einführbaren Elements;
- Fig. 10:: das erfindungsgemäße Funktionselement der Fig. 4 zusammen mit dem in dasselbe ausgehend von einer Vorderseite eingeführ- ten Element der Fig. 7;
- Fig. 11:: das erfindungsgemäße Funktionselement der Fig. 4 zusammen mit einem in dasselbe ausgehend von einer Rückseite eingeführ- ten, insbesondere als Schutzstecker ausgebildeten Element;
- Fig. 12:: das erfindungsgemäße Funktionselement der Fig. 4 zusammen mit einem in dasselbe ausgehend von der Rückseite eingeführten, insbesondere als Schutzstecker ausgebildeten Element und einem in dasselbe ausgehend von der Vorderseite eingeführten Element der Fig. 7;
- Fig. 13:: das erfindungsgemäße Funktionselement der Fig. 4 zusammen mit dem in dasselbe ausgehend von der Vorderseite eingeführten Element der Fig. 8;
- Fig. 14:: das erfindungsgemäße Funktionselement der Fig. 4 zusammen mit einem in dasselbe ausgehend von der Rückseite eingeführten, insbesondere als Schutzstecker ausgebildeten Element und einem in dasselbe ausgehend von der Vorderseite eingeführten Element der Fig. 8;
- Fig. 15:: das erfindungsgemäße Funktionselement der Fig. 4 zusammen mit einem in dasselbe ausgehend von der Rückseite eingeführten, insbesondere als Schutzstecker ausgebildeten Element und einem in dasselbe ausgehend von der Vorderseite eingeführten Element der Fig. 8;
- Fig. 16:: das erfindungsgemäße Funktionselement der Fig. 4 zusammen mit dem in dasselbe ausgehend von der Vorderseite eingeführten Element der Fig. 9;
- Fig. 17:: das erfindungsgemäße Funktionselement der Fig. 4 zusammen mit dem in dasselbe ausgehend von der Vorderseite eingeführten Element der Fig. 8;
- Fig. 18:: einen Querschnitt durch ein erfindungsgemäßes als Schaltelement ausgebildetes Funktionselement; und
- Fig. 19:: das erfindungsgemäße Funktionselement der Fig. 18 zusammen mit dem in dasselbe ausgehend von der Vorderseite eingeführten Element der Fig. 9.

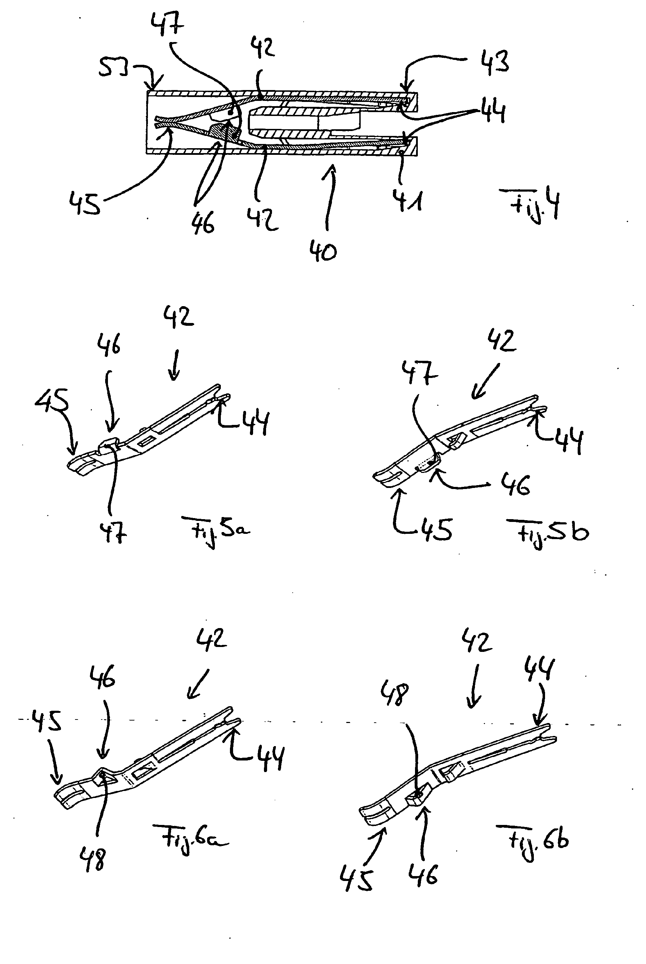

Fig. 4 zeigt einen Querschnitt durch ein erfindungsgemäßes Funktionselement 40 einer Telekommunikationsanlage, nämlich einen Querschnitt durch eine Verteilerleiste im Bereich eines erfindungsgemäßen Funktionselements 40.

Das Funktionselement 40 verfügt über zwei in einem Gehäuse 41 aufgenommene Kontaktfedern 42, die konstruktiv identisch ausgeführt sind, jedoch um 180° gedreht im Gehäuse 41 positioniert sind. Die Kontaktfedern 42 bilden an einer Vorderseite 43 des Gehäuses 41 vorzugsweise als IDC-Kontakte ausgebildete Anschlusselemente 44 aus, die dem Anschluss von Kabeladern eines Teilnehmerkabels und/der Systemkabels und/oder Rangierkabels dienen.

Beabstandet von den Anschlusselementen 44 bilden die Kontaktfedern 42 Kontaktpunkte 45 aus, wobei im Fall der Fig. 4, in welchem das Funktionselement 40 als Trennelement ausgebildet ist, sich die Kontaktfedern 42 im Bereich der Kontaktpunkte 45 berühren. Jede der beiden sich gegenüberliegenden, nämlich übereinander positionierten, zusammenwirkenden Kontaktfedern 42 verfügt in einem Bereich zwischen dem jeweiligen Anschlusselement 44 und dem jeweiligen Kontaktpunkt 45 über eine Ausstellung 46. Im montierten Zustand gemäß Fig. 4 sind die Ausstellungen 46 an voneinander beabstandeten seitlichen Abschnitten der Kontaktfedern 42 positioniert und einander zugewandt.

Gemäß Fig. 4 sind die an den beiden zusammenwirkenden, übereinander positionierten Kontaktfedern 42 ausgebildeten Ausstellungen 46 derart ausgebildet, dass die an der oberen der beiden Kontaktfedern 42 ausgebildete Ausstellung einem ersten seitlichen Abschnitt, nämlich einem von der Vorderseite 43 aus gesehen rechten seitlichen Abschnitt der oberen Kontaktfeder 42, zugeordnet ist, wohingegen die der unteren der beiden Kontaktfedern 42 zugeordnete Ausstellung 46 einem zweiten, nämlich einem von der Vorderseite aus gesehen linken seitlichen Abschnitt der entsprechenden Kontaktfeder 42, zugeordnet ist. Die Ausstellungen 46 der zusammenwirkenden, übereinander positionierten Kontaktfedern 42 sind einander zugewandt, ohne jedoch die jeweils andere der beiden Kontaktfedern 42 zu berühren bzw. zu kontaktieren.

Gemäß Fig. 5a, 5b sind die Ausstellungen 46 als um in etwa 90° gegenüber der Kontaktfeder 42 umgebogene Laschen 47 ausgeführt. Fig. 6a, 6b zeigen gegenüber Fig. 5a und 5b alternative Kontaktfedern 42, wobei sich die Kontaktfedern 42 lediglich durch die Ausgestaltung der Ausstellung 46 unterscheiden. In Fig. 6a, 6b ist die Ausstellung 46 als Auswölbung 48 ausgebildet. Aus fertigungstechnischen Gründen ist jedoch die Ausführung der Fig. 5a, 5b, in welcher die Ausstellung 46 als umgebogene Lasche 47 ausgebildet ist, bevorzugt.

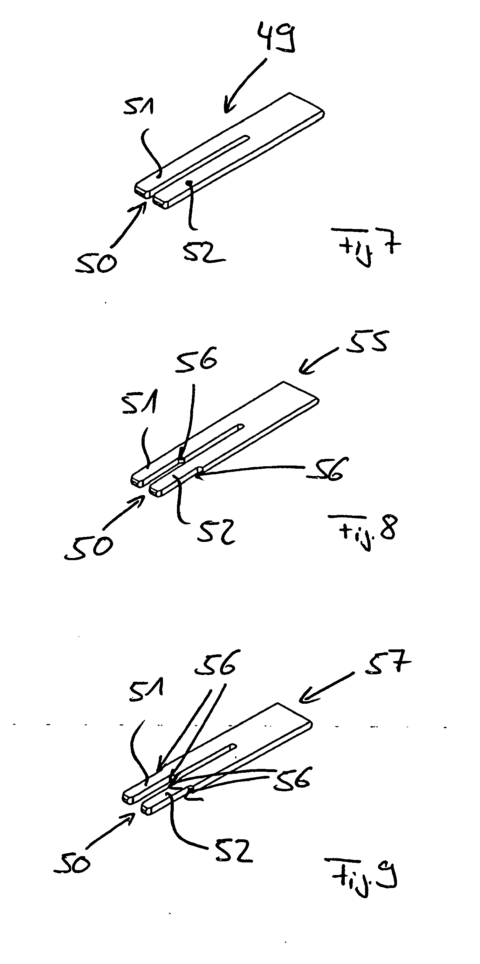

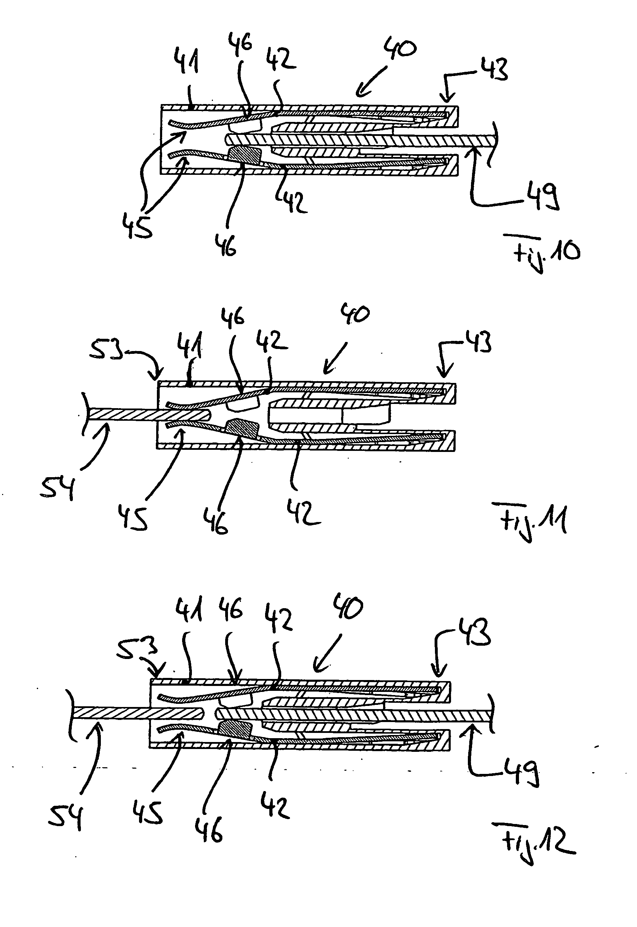

Fig. 10 zeigt das als Trennelement ausgebildete Kontaktelement 40 der Fig. 4 zusammen mit einem ausgehend von der Vorderseite 43 zwischen die Kontaktfedern 41 eingeschobenen Element 49, welches als Trenneinrichtung oder Prüfeinrichtung oder Splittereinrichtung oder Schutzeinrichtung ausgebildet sein kann. In Fig. 10 ist zwischen die Kontaktfedern 42 ein Trennelement 49 eingeschoben, wie es Fig. 7 in Alleindarstellung zeigt. Das Element 49 ist derart ausgebildet bzw. konturiert, dass dasselbe beim Einführen zwischen die beiden Kontaktfedern die Ausstellungen 46 beider sich gegenüberliegender Kontaktfedern 42 berührt und demnach beide Kontaktfedern 42 verformt, sodass, wie einem Vergleich der Fig. 4, 10 entnommen werden kann, der Kontakt zwischen den Kontaktfedern 42 im Bereich der Kontaktpunkte 45 aufgehoben wird.

Das Element 49 verfügt über zwei durch einen Schlitz 50 voneinander getrennte Stege 51, 52, wobei jeder der Stege 51, 52 mit jeweils einem Kontaktfedernpaar eines Funktionselements zusammenwirkt. Das Element 49 kann demnach zwischen die Kontaktfedern 42 von zwei nebeneinander positionierten Funktionselementen eingeführt werden. Jeder Steg 51, 52 wirkt dabei mit den Ausstellungen 46 von zwei sich gegenüberliegenden, übereinander positionierten Kontaktfedern 42 eines Funktionselements 40 zusammen.

Dabei sind gemäß Fig. 7, 10 die Stege 51, 52 derart konturiert, dass dann, wenn das Element 49 zwischen die beiden Kontaktfedern 42 eingeführt wird, beide Ausstellungen 46 von einem der Stege 51, 52 kontaktiert werden und so beide Kontaktfedern 42 aufgebogen bzw. verformt werden.

Fig. 11 zeigt das als Trennelement ausgebildete Funktionselement 40 der Fig. 4 mit einem von einer Rückseite 53 aus zwischen die beiden Kontaktfedern 42 eingeschobenen Element 54, wobei es sich beim Element um eine Splittereinrichtung oder eine Schutzeinrichtung oder eine Prüfeinrichtung oder eine Trenneinrichtung handeln kann. Die Kontaktpunkte 45 beider Kontaktfedern 42 liegen gemäß Fig.11 am Element 54 an.

Wie Fig. 12 zeigt, kann dann, wenn ausgehend von der Rückseite 53 das Element 54 zwischen die Kontaktpunkte 45 der übereinander positionierten Kontaktfedern 42 eingeführt ist, ausgehend von der Vorderseite 43 das Element 49 ebenfalls zwischen die beiden Kontaktfedern 42 eingeschoben werden, ohne dass das von der Rückseite 53 aus eingeführte Element 54 entfernt werden muss. Dabei kann das ausgehend von der Rückseite 53 eingeführte Element 54 ein Trennelement und das ausgehend von der Vorderseite 43 eingeführte Element 54 z. B. ein Schutzelement oder Splitterelement sein. Ebenso kann das ausgehend von der Rückseite 53 eingeführte Element 54 z. B. ein Schutzelement oder Splitterelement und das ausgehend von der Vorderseite 43 eingeführte Element 54 ein Trennelement sein.

Wie bereits ausgeführt, ist im Ausführungsbeispiel der Fig. 7 das Element 49 derart ausgeführt, dass dann, wenn dasselbe zwischen die beiden übereinander positionierten Kontaktfedern 42 eingeführt wird, ein Steg desselben an den Ausstellungen 46 der beiden Kontaktfedern 42 zur Anlage kommt und demnach beide Kontaktfedern 42 verformt. Demgegenüber zeigt Fig. 8 ein alternatives Element 55, welches derart ausgebildet bzw. konturiert ist, dass dasselbe beim Einführen zwischen die beiden Kontaktfedern 42 ausschließlich eine Ausstellung 46 der beiden zusammenwirkenden, sich gegenüberliegenden bzw. übereinander positionierten Kontaktfedern berührt und verformt, wohingegen dasselbe die Ausstellung der anderen Kontaktfeder umfährt und nicht berührt, sodass die entsprechende Kontaktfeder 42 auch nicht verformt wird.

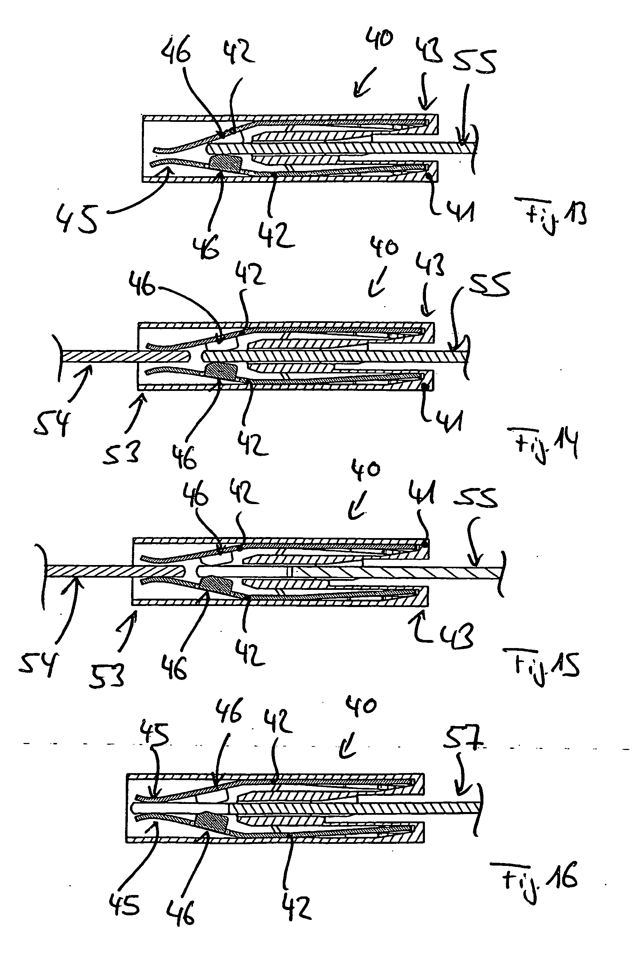

Dies kann Fig. 13 bis 15 entnommen werden, wobei in Fig. 13, 14 ein Steg des Elements 55 jeweils die Ausstellung 46 der unteren Kontaktfeder 42 berührt und demnach die untere Kontaktfeder 42 verformt, wohingegen derselbe die Ausstellung 46 der oberen Kontaktfeder umfährt und dieselbe nicht verformt. In Fig. 15 ist hingegen das Element 55 mit einer anderen Orientierung zwischen die beiden Kontaktfedern 42 eingeführt, sodass ein Steg des Elements 55 an der Ausstellung 46 der oberen Kontaktfeder 42 zur Anlage kommt und demnach die obere Kontaktfeder 42 verformt, wohingegen die untere Kontaktfeder nicht verformt wird. Hierdurch kann gewährleistet werden, dass bei Einführen des Elements 55 ausgehend von der Vorderseite 43 ausschließlich eine Kontaktfeder 42 von einem ausgehend von der Rückseite 53 zwischen die Kontaktpunkte 45 der Kontaktfedern 42 eingeschobenen Element 54 abgehoben und damit dekontaktiert wird.

Wie Fig. 8 entnommen werden kann, weisen hierzu die beiden Stege 51, 52 des Elements 55 ausschließlich an einer Seite eine Aussparung 56 auf, wobei die Tiefe der Aussparungen 56 an die Breite der Ausstellungen 46 der Kontaktfedern 42 angepasst ist, sodass die Aussparungen 46 ohne Berührung derselben umfahren werden können.

Fig. 9 zeigt eine weitere Alternative für ein ausgehend von der Vorderseite 43 des Funktionselements 40 zwischen die Kontaktfedern 42 derselben einführbares Element 57, wobei das Element 57 der Fig. 9 derart ausgeführt ist, dass dann, wenn dasselbe zwischen die Kontaktfedern 42 der Funktionselements 40 ausgehend von der Vorderseite 43 eingeschoben ist, ein Steg desselben die Ausstellungen 46 der beiden zusammenwirkenden, sich gegenüberliegenden bzw. übereinander positionierten Kontaktfedern 42 umfährt und demnach nicht berührt. Diesbezüglich wird auf Fig. 16 verwiesen.

Gemäß Fig. 9 sind die Stege 51, 52 des Elements 57 beidseitig mit entsprechenden Aussparungen 56 konturiert.

Bei einem weiteren Einführen des Elements 57 (siehe Fig. 16) ausgehend von der Vorderseite ist ein Steg 51, 52 desselben zwischen die Kontaktpunkte 45 der Kontaktfedern 42 eines Funktionselements 40 einschiebbar, um so die Kontaktfedern 42 im Bereich der Kontaktpunkte 45 voneinander zu trennen. Hierzu ist lediglich Voraussetzung, dass ausgehend von der Rückseite 53 kein weiteres Element zwischen die Kontaktpunkte 45 der sich gegenüberliegenden, zusammenwirkenden Kontaktfedern 42 eingeschoben ist.

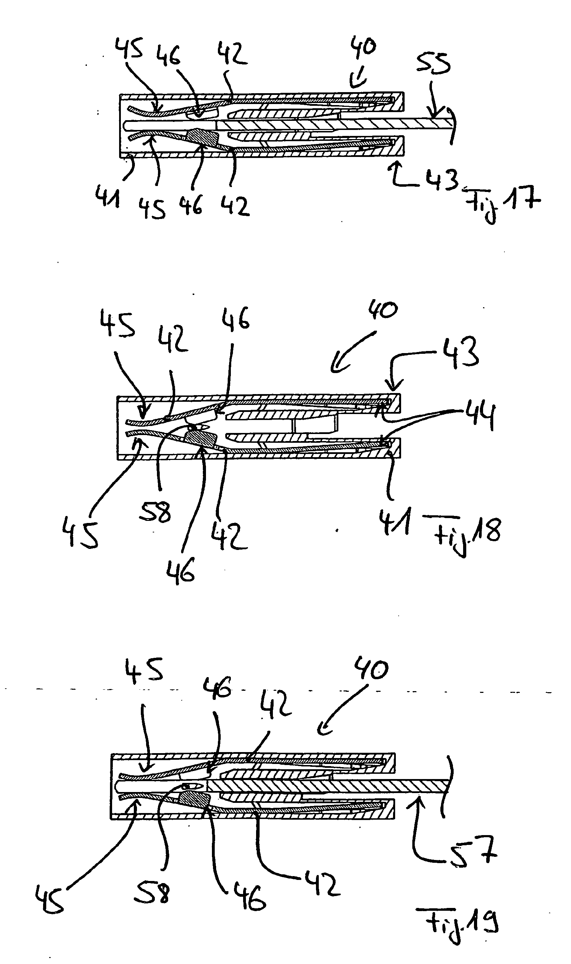

Fig. 17 zeigt das Funktionselement 40 der Fig. 4 zusammen mit einem von der Vorderseite 43 aus zwischen die Kontaktfedern 42 desselben eingeschobenen Element 55 gemäß Fig. 8, wobei im Unterschied zu Fig. 15 das Element 55 so weit eingeschoben ist, dass es derart zwischen die Kontaktpunkte 45 gelangt, dass dasselbe den Kontaktpunkt 45 einer, nämlich der unteren, Kontaktfeder 42 berührt, jedoch den Kontaktpunkt 45 der anderen, nämlich der oberen, Kontaktfeder 42 nicht berührt. Fig. 17 entspricht demnach Fig. 16 mit einem anderen von der Vorderseite aus eingeschobenen Element. Hierdurch kann gleichzeitig eine Trennfunktion für eine Kontaktfeder mit einer Schutzfunktion für die andere Kontaktfeder realisiert bzw. kombiniert werden.

In Fig. 4, 10 bis 17 wurde die Erfindung am Beispiel eines als Trennelement ausgebildeten Funktionselements 40 beschrieben. Fig. 18 und 19 zeigen ein erfindungsgemäßes Funktionselement 40, welches als Schaltelement ausgebildet ist.

Der einzige Unterschied zwischen dem als Schaltelement ausgebildeten Funktionselement 40 der Fig. 18 und dem als Trennelement ausgebildeten Funktionselement 40 der Fig. 4 besteht darin, dass das als Schaltelement ausgebildete Funktionselement 40 der Fig. 18 zusätzlich einen zwischen den Kontaktfedern 42 positionierten Steg 58 umfasst, der dafür sorgt, dass dann, wenn weder ausgehend von der Vorderseite 43 noch ausgehend von der Rückseite 53 ein Element zwischen die Kontaktfedern 42 eingeschoben ist, sich die beiden Kontaktfedern 42 im Bereich ihrer Kontaktpunkte 45 nicht berühren. Gemäß Fig. 18 erstreckt sich dieser Steg 58 in einem Bereich zwischen den Ausstellungen 46 der Kontaktfedern 42.

In Fig. 19 ist zwischen die Kontaktfedern 42 des als Schaltelement ausgebildeten Funktionselements 40 der Fig. 18 das Element 57 gemäß Fig. 9 von der Vorderseite 43 aus eingeschoben, wobei das Element 57 in diesem Zustand beide Kontaktpunkte 45 der übereinander positionierten Kontaktfedern 42 kontaktiert und so die in Fig. 18 vorhandene elektrische Isolierung der beiden Kontaktfedern 42 gegeneinander aufhebt.

### Bezugszeichenliste

- 20: Funktionselement
- 21: Funktionselement
- 22: Gehäuse
- 23: Kontaktfeder
- 24: Kontaktfeder
- 25: Vorderseite
- 26: Anschlusselement
- 27: Kontaktpunkt
- 28: Steg
- 29: Ausstellung
- 30: Funktionselement
- 31: Gehäuse
- 32: Kontaktfeder
- 33: Kontaktfeder
- 34: Kontaktfeder
- 35: Kontaktpunkt
- 36: isolierendes Element
- 37: Vorderseite
- 38: Rückseite
- 39: Anschlusselement
- 40: Funktionselement
- 41: Gehäuse
- 42: Kontaktfeder
- 43: Vorderseite
- 44: Anschlusselement
- 45: Kontaktpunkt
- 46: Ausstellung
- 47: Lasche
- 48: Auswölbung

- 49: Element
- 50: Schlitz
- 51: Steg
- 52: Steg
- 53: Rückseite
- 54: Element
- 55: Element
- 56: Aussparung
- 57: Element
- 58: Steg

## Patentansprüche

1. Funktionselement (40) einer Telekommunikationsanlage, mit in einem Gehäuse (41) aufgenommenen Kontaktfedern (42), wobei die Kontaktfedern an einer Vorderseite des Gehäuses insbesondere als IDC-Kontakte ausgebildete Anschlusselemente (44) für den Anschluss von Kabeladern eines Teilnehmerkabels und/oder Systemkabels und/oder Rangierkabels bilden, wobei in einem von den Anschlusselementen beabstandeten Abschnitt von den Kontaktfedern ausgebildete Kontaktpunkte (45) bei Ausbildung eines Trennelements sich berühren oder bei Ausbildung eines Schaltelements unter Zwischenanordnung eines Stegs voneinander getrennt sind, und wobei ausgehend von der Vorderseite und/oder einer Rückseite des Gehäuses zwischen die Kontaktfedern ein insbesondere als Trenneinrichtung oder Prüfeinrichtung oder Splittereinrichtung oder Schutzeinrichtung ausgebildetes Element einführbar ist, wobei
zusammenwirkende, sich gegenüberliegende Kontaktfedern (42) an voneinander beabstandeten seitlichen Abschnitten, die zwischen den Anschlusselementen (44) und den Kontaktpunkten (45) der Kontaktfedern (42) positioniert sind, einander zugewandte Ausstellungen (46) aufweisen, derart, dass einerseits ausgehend von der Rückseite (53) zwischen die Kontaktpunkte (45) der Kontaktfedern (42) ein als Trenneinrichtung oder Prüfeinrichtung oder Splittereinrichtung oder Schutzeinrichtung ausgebildetes erstes Element (54) einführbar ist, und dass andererseits sowohl ohne eingeführtes erstes Element als auch bei eingeführtem ersten Element ausgehend von der Vorderseite (43) zwischen die Ausstellungen (46) der Kontaktfedern (42) ein als Trenneinrichtung oder Prüfeinrichtung oder Splittereinrichtung oder Schutzeinrichtung ausgebildetes zweites Element (49, 55, 57) einführbar ist, **dadurch gekennzeichnet, dass**
an zwei zusammenwirkenden, übereinander positionierten Kontaktfedern (42) die Ausstellungen derart ausgebildet sind, dass die an der oberen der beiden Kontaktfedern ausgebildete Ausstellung (46) einem ersten seitlichen Abschnitt und die an der unteren der beiden Kontaktfedern ausgebildete Ausstellung (46) einem zweiten seitlichen Abschnitt, der dem ersten seitlichen Abschnitt gegenüberliegt, zugeordnet ist, wobei die Ausstellungen der beiden Kontaktfedern jeweils der anderen der beiden Kontaktfedern zugewandt sind ohne jedoch die jeweils andere der beiden Kontaktfedern zu kontaktieren.

2. Funktionselement nach Anspruch 1, **dadurch gekennzeichnet, dass** die an einem seitlichen Abschnitt einer Kontaktfeder (42) ausgebildete Ausstellung (46) als um in etwa 90° gegenüber der Kontaktfeder umgebogen Lasche (47) ausgebildet ist.

3. Funktionselement nach Anspruch 1, **dadurch gekennzeichnet, dass** die an einem seitlichen Abschnitt einer Kontaktfeder (42) ausgebildete Ausstellung (46) als Auswölbung (48) der Kontaktfeder ausgebildet ist.

4. Funktionselement nach einem der Ansprüche 1 bis 3, **dadurch gekennzeichnet, dass** das ausgehend von der Vorderseite zwischen die Ausstellungen (46) der Kontaktfedern (42) einführbare zweite Element (49) derart ausgebildet ist, dass dasselbe beim Einführen die Ausstellungen (46) von zwei zusammenwirkenden, sich gegenüberliegenden Kontaktfedern (42) berührt und hierbei beide Kontaktfedern verformt.

5. Funktionselement nach einem der Ansprüche 1 bis 3, **dadurch gekennzeichnet, dass** das ausgehend von der Vorderseite zwischen die Ausstellungen (46) der Kontaktfedern (42) einführbare zweite Element (55) derart ausgebildet ist, dass dasselbe beim Einführen die Ausstellung (46) ausschließlich einer der zusammenwirkenden, sich gegenüberliegenden Kontaktfedern (42) berührt und hierbei die jeweilige Kontaktfeder (42) verformt, wohingegen dasselbe die Ausstellung (46) der anderen Kontaktfeder (42) umfährt und nicht berührt.

6. Funktionselement nach Anspruch 5, **dadurch gekennzeichnet, dass** das ausgehend von der Vorderseite zwischen die Ausstellungen (46) der Kontaktfedern (42) einführbare zweite Element (55) eine Ausstellung der sich gegenüberliegenden Kontaktfedern umfährt jedoch den Kontaktpunkt (45) derselben berührt.

7. Funktionselement nach einem der Ansprüche 1 bis 3, **dadurch gekennzeichnet, dass** das ausgehend von der Vorderseite zwischen die Ausstellungen (46) der Kontaktfedern (42) einführbare zweite Element (57) derart ausgebildet ist, dass dasselbe beim Einführen die Ausstellungen (46) von zwei zusammenwirkenden, sich gegenüberliegenden Kontaktfedern (42) umfährt und nicht berührt.

8. Funktionselement nach Anspruch 7, **dadurch gekennzeichnet, dass** das ausgehend von der Vorderseite zwischen die Ausstellungen (46) der Kontaktfedern (42) einführbare zweite Element (57) die Ausstellungen der sich gegenüberliegenden Kontaktfedern umfährt jedoch die Kontaktpunkte (45) derselben berührt.

9. Funktionselement nach einem der Ansprüche 1 bis 8, **dadurch gekennzeichnet, dass** dasselbe als Trennelement ausgebildet ist, deren Kontaktfedern sich im Bereich der Kontaktpunkte dann berühren, wenn weder von der Vorderseite noch von der Rückseite aus ein Element zwischen dieselben eingeführt ist.

10. Funktionselement nach einem der Ansprüche 1 bis 8, **dadurch gekennzeichnet, dass** dasselbe als Schaltelement ausgebildet ist, deren Kontaktfedern sich im Bereich der Kontaktpunkte dann nicht berühren, wenn weder von der Vorderseite noch von der Rückseite aus ein Element zwischen dieselben eingeführt ist.

## Claims

1. Functional element (40) of a telecommunications system, having contact springs (42) which are accommodated in a housing (41), wherein the contact springs form connection elements (44), which are in the form of IDC contacts in particular, for the connection of cable cores of a subscriber cable and/or system cable and/or patch cable on a front face of the housing, wherein contact points (45), which are formed in a section of the contact springs which is spaced apart from the connection elements, make contact when a disconnection element is formed or are separated from one another when a switching element is formed with the interposition of a web, and wherein an element, which is in the form of a disconnection device or test device or splitter device or protection device in particular, can be inserted between the contact springs starting from the front face and/or a rear face of the housing, wherein
interacting contact springs (42) which are situated opposite one another have projections (46), which face one another, on lateral sections, which are spaced apart from one another and which are positioned between the connection elements (44) and the contact points (45) of the contact springs (42), in such a way that firstly a first element (54), which is in the form of a disconnection device or test device or splitter device or protection device, can be inserted between the contact points (45) of the contact springs (42) starting from the rear face (53), and that secondly a second element (49, 55, 57), which is in the form of a disconnection device or test device or splitter device or protection device, can be inserted between the projections (46) of the contact springs (42) starting from the front face (43) both without the first element inserted and with the first element inserted, **characterized in that**
the projections are formed on two interacting contact springs (42), which are positioned one above the other, in such a way that the projection (46) which is formed on the upper of the two contact springs is associated with a first lateral section, and the projection (46) which is formed on the lower of the two contact springs is associated with a second lateral section which is situated opposite the first lateral section, wherein the projections of the two contact springs each face the other of the two contact springs, but without making contact with the respectively other of the two contact springs.

2. Functional element according to Claim 1, **characterized in that** the projection (46) which is formed on a lateral section of a contact spring (42) is in the form of a lug (47) which is bent through approximately 90° in relation to the contact spring.

3. Functional element according to Claim 1, **characterized in that** the projection (46) which is formed on a lateral section of a contact spring (42) is in the form of a concavity (48) of the contact spring.

4. Functional element according to one of Claims 1 to 3, **characterized in that** the second element (49), which can be inserted between the projections (46) of the contact springs (42) starting from the front face, is formed in such a way that, during insertion, it makes contact with the projections (46) of two interacting contact springs (42), which are situated opposite one another, and in the process deforms the two contact springs.

5. Functional element according to one of Claims 1 to 3, **characterized in that** the second element (55), which can be inserted between the projections (46) of the contact springs (42) starting from the front face, is formed in such a way that, during insertion, it makes contact with the projection (46) of only one of the interacting contact springs (42), which are situated opposite one another, and in the process deforms the respective contact spring (42), whereas it bypasses and does not make contact with the projection (46) of the other contact spring (42).

6. Functional element according to Claim 5, **characterized in that** the second element (55), which can be inserted between the projections (46) of the contact springs (42) starting from the front face, bypasses a projection of the contact springs which are situated opposite one another, but makes contact with the contact point (45) of said contact springs.

7. Functional element according to one of Claims 1 to 3, **characterized in that** the second element (57), which can be inserted between the projections (46) of the contact springs (42) starting from the front face, is formed in such a way that, during insertion, it bypasses and does not make contact with the projections (46) of two interacting contact springs (42) which are situated opposite one another.

8. Functional element according to Claim 7, **characterized in that** the second element (57), which can be inserted between the projections (46) of the contact springs (42) starting from the front face, bypasses the projections of the contact springs which are situated opposite one another, but makes contact with the contact points (45) of said contact springs.

9. Functional element according to one of Claims 1 to 8, **characterized in that** it is in the form of a disconnection element, the contact springs of said disconnection element making contact in the region of the contact points when an element is not inserted between said contact springs either from the front face or from the rear face.

10. Functional element according to one of Claims 1 to 8, **characterized in that** it is in the form of a switching element, the contact springs of said switching element not making contact in the region of the contact points when an element is not inserted between said contact springs either from the front face or from the rear face.

## Revendications

1. Élément fonctionnel (40) d'un équipement de télécommunication, comprenant des ressorts de contact (42) logés dans un boîtier (41), les ressorts de contact formant sur un côté avant du boîtier des éléments de raccordement (44), notamment réalisés sous la forme de contacts autodénudants, pour le raccordement des fils de câble d'un câble d'abonné et/ou d'un câble système et/ou d'un cordon de connexion, des points de contact (45) formés par les ressorts de contact, dans une portion espacée des éléments de raccordement, se touchant lors de la formation d'un élément de séparation ou étant séparés les uns des autres lors de la formation d'un élément de commutation en intercalant une nervure, et un élément, notamment réalisé sous la forme d'un dispositif de séparation ou d'un dispositif de contrôle ou d'un dispositif de fractionnement ou d'un dispositif de protection, pouvant être introduit depuis le côté avant et/ou un côté arrière du boîtier entre les ressorts de contact,
les ressorts de contact (42) interagissant mutuellement opposés présentant des projections (46) se faisant face l'une à l'autre sur des portions espacées latéralement l'une de l'autre, lesquelles sont positionnées entre les éléments de raccordement (44) et les points de contact (45) des ressorts de contact (42), de telle sorte qu'il est possible d'introduire d'un côté, depuis le côté arrière (53) entre les points de contact (45) des ressorts de contact (42), un premier élément (54) réalisé sous la forme d'un dispositif de séparation ou d'un dispositif de contrôle ou d'un dispositif de fractionnement ou d'un dispositif de protection et que, d'un autre côté, il est possible d'introduire depuis le côté avant (43) entre les projections (46) des ressorts de contact (42), aussi bien lorsque le premier élément n'est pas introduit que lorsque le premier élément est introduit, un deuxième élément (49, 55, 57) réalisé sous la forme d'un dispositif de séparation ou d'un dispositif de contrôle ou d'un dispositif de fractionnement ou d'un dispositif de protection, **caractérisé en ce que**
les projections sur deux ressorts de contact (42) interagissant positionnés l'un au-dessus de l'autre sont configurées de telle sorte que la projection (46) formée sur celui des deux ressorts de contact qui se trouve en haut est associée à une première portion latérale et la projection (46) formée sur celui des deux ressorts de contact qui se trouve en bas est associée à une deuxième portion latérale qui se trouve à l'opposé de la première portion latérale, les projections des deux ressorts de contact faisant respectivement face à l'autre des deux ressorts de contact sans toutefois toucher l'autre respectif des deux ressorts de contact.

2. Élément fonctionnel selon la revendication 1, **caractérisé en ce que** la projection (46) formée sur une portion latérale d'un ressort de contact (42) est réalisée sous la forme d'une languette (47) recourbée d'environ 90° par rapport au ressort de contact.

3. Élément fonctionnel selon la revendication 1, **caractérisé en ce que** la projection (46) formée sur une portion latérale d'un ressort de contact (42) est réalisée sous la forme d'un bombement (48) du ressort de contact.

4. Élément fonctionnel selon l'une des revendications 1 à 3, **caractérisé en ce que** le deuxième élément (49) qui peut être introduit depuis le côté avant entre les projections (46) des ressorts de contact (42) est configuré de telle sorte que celui-ci, lors de l'introduction, touche les projections (46) de deux ressorts de contact (42) interagissant mutuellement opposés et déforme ainsi les deux ressorts de contact.

5. Élément fonctionnel selon l'une des revendications 1 à 3, **caractérisé en ce que** le deuxième élément (55) qui peut être introduit depuis le côté avant entre les projections (46) des ressorts de contact (42) est configuré de telle sorte que celui-ci, lors de l'introduction, touche exclusivement la projection (46) de l'un des ressorts de contact (42) interagissant mutuellement opposés et déforme ainsi le ressort de contact (42) correspondant, alors que celui-ci contourne et ne touche pas la projection (46) de l'autre ressort de contact (42).

6. Élément fonctionnel selon la revendication 5, **caractérisé en ce que** le deuxième élément (55) qui peut être introduit depuis le côté avant entre les projections (46) des ressorts de contact (42) contourne une projection des ressorts de contact mutuellement opposés, mais touche cependant le point de contact (45) de celle-ci.

7. Élément fonctionnel selon l'une des revendications 1 à 3, **caractérisé en ce que** le deuxième élément (57) qui peut être introduit depuis le côté avant entre les projections (46) des ressorts de contact (42) est configuré de telle sorte que celui-ci, lors de l'introduction, contourne et ne touche pas les projections (46) de deux ressorts de contact (42) interagissant mutuellement opposés.

8. Élément fonctionnel selon la revendication 7, **caractérisé en ce que** le deuxième élément (57) qui peut être introduit depuis le côté avant entre les projections (46) des ressorts de contact (42) contourne les projections des ressorts de contact mutuellement opposés, mais touche cependant les points de contact (45) de celles-ci.

9. Élément fonctionnel selon l'une des revendications 1 à 8, **caractérisé en ce que** celui-ci est réalisé sous la forme d'un élément de séparation dont les ressorts de contact se touchent dans la zone des points de contact lorsqu'aucun élément n'est introduit entre ceux-ci, ni depuis le côté avant, ni depuis le côté arrière.

10. Élément fonctionnel selon l'une des revendications 1 à 8, **caractérisé en ce que** celui-ci est réalisé sous la forme d'un élément de commutation dont les ressorts de contact ne se touchent pas dans la zone des points de contact lorsqu'aucun élément n'est introduit entre ceux-ci, ni depuis le côté avant, ni depuis le côté arrière.
